# EUROPÄISCHE PATENTSCHRIFT

(11) **EP 1 151 717 B1**
(45) Veröffentlichungstag und Bekanntmachung des Hinweises auf die Patenterteilung: **17.12.2003**
(21) Anmeldenummer: 01104216.5
(22) Anmeldetag: 22.02.2001
(51) Int. Cl.: A47L 15/42

(54) **Geschirrspülmaschine, insbesondere einbaufähige Geschirrspülmaschine mit einer optischen Betriebsanzeige**
Dishwasher, in particular built in dishwasher with an optical operating status display
Lave-vaisselle, en particulier lave-vaisselle encastrable comportant un affichage optique du mode de fonctionnement

(30) Priorität: 06.05.2000 DE 10022206
(43) Veröffentlichungstag der Anmeldung: 07.11.2001
(73) Patentinhaber: Miele & Cie. KG, 33332 Gütersloh (DE)
(72) Erfinder: Evertzberg, Frank, 33428 Marienfeld (DE); Schwarze, Daniel, 33824 Werther (DE); Willbrand, Volker, 33824 Werther (DE)

(56) Entgegenhaltungen:
- EP-A- 0 691 100
- DE-A- 3 621 438

## Beschreibung

Der Gegenstand der Erfindung betrifft eine Geschirrspülmaschine, insbesondere eine einbaufähige Geschirrspülmaschine mit einer schwenkbaren Gerätetür, die auf ihrer oberen Stirnfläche eine optische Betriebsanzeige mit einer oder mehreren Lichtquellen aufweist, welche bei geschlossener Gerätetür von einer oben auf der Spülmaschine aufliegenden Arbeitsplatte überdeckt sind, wobei im Spalt über der Gerätetür und der Unterseite der überdeckenden Arbeitsplatte ein Lichtleiter angeordnet ist, welcher das Signallicht der überdeckten optischen Betriebsanzeige zur Gerätefrontseite lenkt.

Bei einer bekannten Geschirrspülmaschine dieser Art (vgl. EP 0 691 100 A1) ist die zwischen der Gerätetüroberkante und überdeckender Arbeitsplatte im Überstand der Arbeitsplatte angeordnete Anzeige- oder Signaleinrichtung in Form eines Montagesatzes ausgebildet, wobei als lichtübertragendes Element ein plattenförmiger Lichtleiter aus durchsichtigem Glas, Plexiglas® oder dergl. Material gewählt werden kann. Dabei ist es ein Problem, das flache Lichtübertragungselement lagejustiert im schmalen Spalt an der Arbeitsplattenunterseite so unterzubringen und zu befestigen, dass die lichtaufnehmenden Flächen des Lichtleitelements exakt auf die bei geschlossener Tür verdeckten kleinen Lichtquellen (z. B. LED's) der optischen Betriebsanzeige ausgerichtet sind. Geringe Lageabweichungen vom Einbauort mindern bereits nachteilig die Lichtintensität auf der anzeigenden Seite des Lichtleiters. Besonders schwierig wird der Einbau des Lichtleiters, wenn im schmalen Spalt zwischen Tür und Geräteabdeckung noch zusätzlich ein Wrasenschutzelement anzuordnen ist. Dadurch verringert sich die ohnehin geringe Spalthöhe für die Montage der optischen Signaleinrichtung. Auch hier soll die Erfindung Abhilfe schaffen.

Erfindungsgemäß werden diese Probleme mit den Merkmalen des Patentanspruchs 1 gelöst. Vorteilhafte Ausgestaltungen und Weiterbildungen der Erfindung ergeben sich aus den nachfolgenden Unteransprüchen.

Die Erfindung erleichtert vorteilhaft den lagegerechten Einbau des Lichtleiters im schmalen Spalt zwischen der Gerätetüroberkante und der darüber angeordneten Arbeits- oder Geräteabdeckplatte, so dass alle optischen Elemente des optischen Systems exakt aufeinander ausgerichtet werden können. Hierdurch ist eine auch bei hellem Umgebungslicht optisch gut wahrnehmbare Signalgabe möglich.

Ein Ausführungsbeispiel der Erfindung ist in den Zeichnungen rein schematisch dargestellt und wird nachfolgend näher beschrieben. Es zeigen:
- Figur 1: einen von Küchenschränken und Arbeitsplatte begrenzten Nischenraum einer Küchenzeile für die Aufnahme einer vollintegrierfähigen Geschirrspülmaschine mit dem aktiven Teil einer optischen Betriebsanzeige auf der oberen Stirnfläche der Gerätetür, in perspektivischer Darstellung,
- Figur 2: die in den Nischenraum eingeschobene Geschirrspülmaschine ausschnittsweise in der Seitenansicht,
- Figur 3: die Geschirrspülmaschine mit geöffneter Gerätetür in perspektivischer Darstellung,
- Figur 4: die Geschirrspülmaschine mit geschlossener Gerätetür ausschnittsweise, in perspektivischer Darstellung,
- Figur 5: ein mit der optischen Betriebsanzeige zusammenwirkender Lichtleiter in der Vorderansicht,
- Figur 6: der Lichtleiter in der Draufsicht,
- Figur 7: ein separates Rahmenteil zur Aufnahme des Lichtleiters,
- Figur 8: die den Nischenraum über der Geschirrspülmaschine begrenzende Arbeitsplatte in Kombination mit einem Wrasenschutzelement im Bereich oberhalb der Gerätetür, wobei das Wrasenschutzelement mit dem Lichtleiter kombiniert ist, ausschnittsweise in perspektivischer Darstellung,
- Figur 9: das mit dem Lichtleiter versehene Wrasenschutzelement in der Draufsicht,
- Figur 10: der Lichtleiter gemäß Figur 5 in Wirkverbindung mit der optischen Betriebsanzeige der Geschirrspülmaschine und
- Figur 11: der Lichtleiter gemäß Figur 6 in Wirkverbindung mit der optischen Betriebsanzeige der Geschirrspülmaschine.

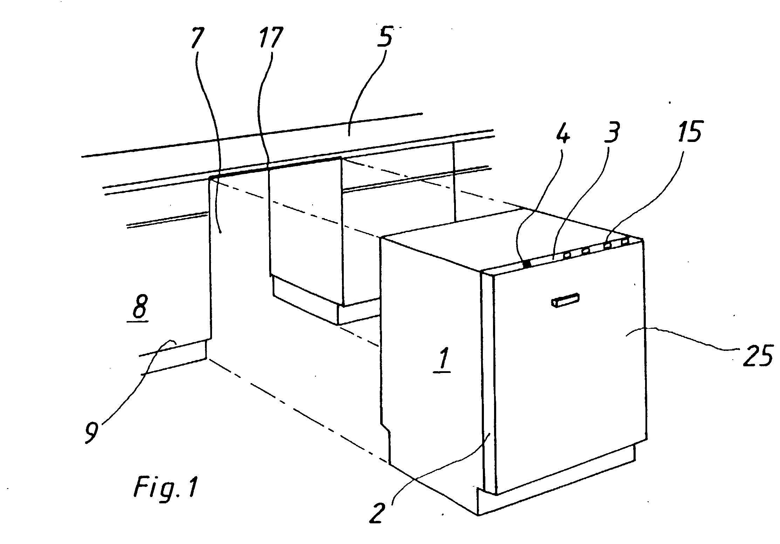

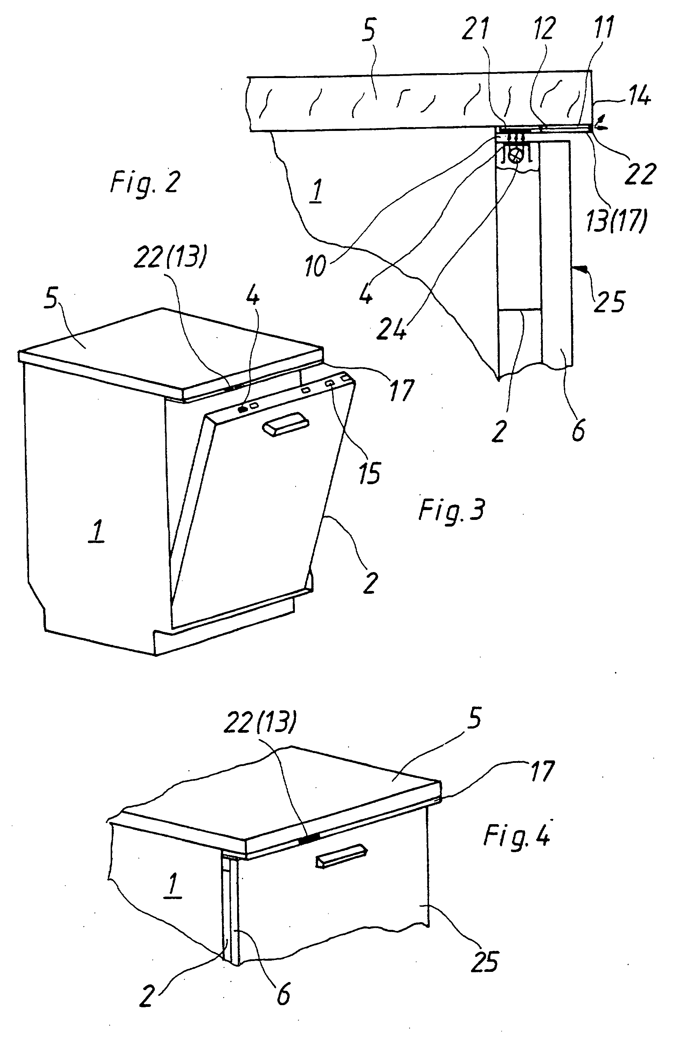

Ein in Fig. 1 dargestelltes Haushaltgerät, insbesondere eine einbaufähige, vollintegrierfähige Geschirrspülmaschine (1) mit einer abschwenkbaren Gerätetür (2), die ggf. auch mit einer Dekor- oder Vorsatzplatte (6) aus Holz oder dergl. vollständig verkleidet sein kann (Fig. 2 u. 4), weist auf der oberen Stirnfläche (3) der Gerätetür (2) eine optische Betriebsanzeige (4) auf. Die optische Betriebsanzeige (4) signalisiert den Betriebszustand des Haushaltgerätes und umfasst hierfür eine oder mehrere Lichtquellen (24), z. B. LED's. Diese Leuchtmittel sind bei geschlossener Gerätetür (2) von einer oben auf der Spülmaschine aufliegenden Arbeitsplatte (5) überdeckt, so dass auch deren Licht für den Gerätebediener von der Gerätefrontseite (25) her nicht sichtbar ist. Neben der optischen Betriebsanzeige (4) sind ferner auf der Stirnfläche (3) der Gerätetür (2) die zur Spülprogrammwahl erforderlichen Anzeige- und Bedienelemente (15) vorgesehen. Auch diese Elemente sind bei geschlossener Gerätetür (2) nicht sichtbar.

Fig. 4 zeigt die mit der Arbeitsplatte (5) abgedeckte Haushalt-Geschirrspülmaschine (1 ) ausschnittsweise bei geschlossener Gerätetür (2), die hier vollständig von der vorerwähnten Dekoroder Vorsatzplatte (6) überdeckt ist. Die Dekor- oder Vorsatzplatte (6) entspricht im Aussehen der Frontplatte eines benachbarten Küchenunterschrankes. Durch eine solche Gerätefrontverkleidung ist das in den Nischenraum (7) einer Küchenzeile (8) gemäß Fig. 1 einzuschiebende Gerät dann nicht mehr von den benachbarten Schrankmöbeln (9) der Zeile zu unterscheiden. Die Fig. 2 zeigt die in den Nischenraum (7) eingeschobene Geschirrspülmaschine (1) ausschnittsweise in der Seitenansicht mit der vorerwähnten Türverkleidung.

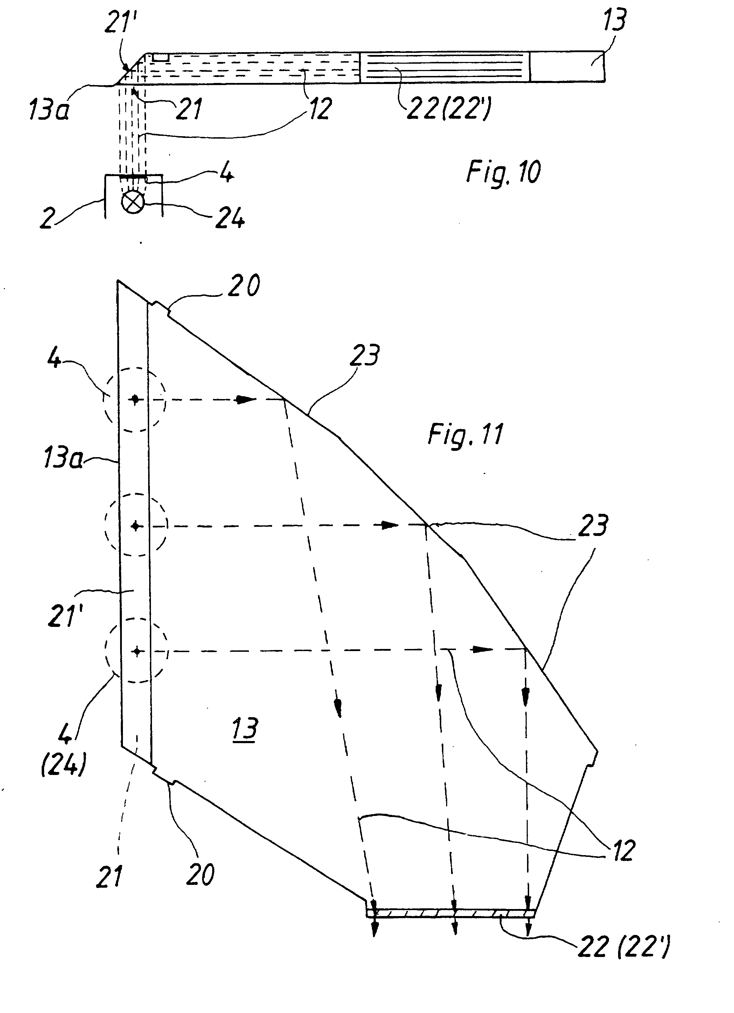

Um den durch die Betriebsanzeige (4) jeweils signalisierten Betriebszustand (z. B. Ein/Aus; Störung; Ende) der Geschirrspülmaschine (1) bei geschlossener Gerätetür (2) für den Bediener nach außen hin sichtbar zu machen, ist im Spalt (10) über der Gerätetür (2) an der Arbeitsplattenunterseite (11 ) ein Lichtleiter (13) im Strahlengang (12) der Lichtquellen (24) der optischen Betriebsanzeige (4) angeordnet, welcher das Licht (sh. Fig. 10 und 11) der vom Plattenüberstand (14) der Arbeitsplatte (5) überdeckten optischen Betriebsanzeige (4) zur Gerätefrontseite (25) hin lenkt, so dass der jeweilige Betriebszustand des Gerätes trotz verdeckter Betriebsanzeige (4) und Lichtquellen (24) gut erkennbar ist.

Die Fig. 3 zeigt die Geschirrspülmaschine (1) bei geöffneter Gerätetür (2) mit inaktivem Lichtleiter (13), sowie die Lage des Lichtleiters (13) am Plattenüberstand (14) der Arbeitsplatte (5). Die Arbeitsplatte (5) besteht in aller Regel aus einem beschichteten Holzwerkstoff, wie Spanplatte oder dergl. Jedoch ist auch ein Plattenwerkstoff aus Steinmaterial oder Kunststoff möglich.

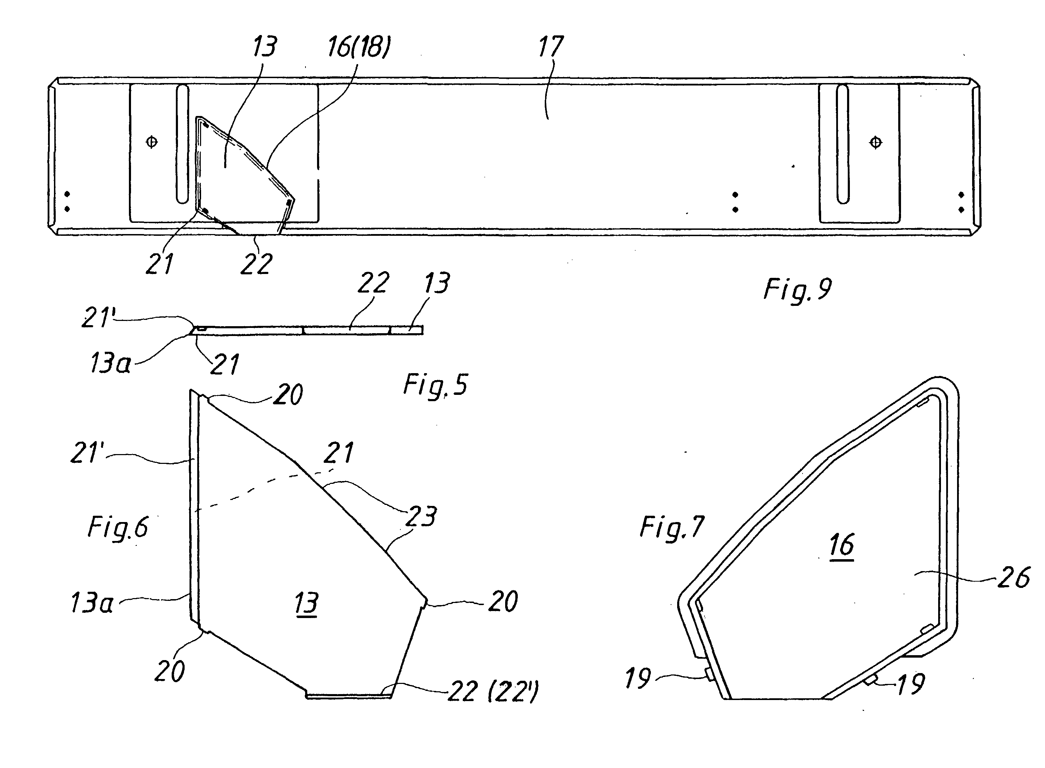

Der in Fig. 5 und 6 separat gezeigte und über die optische Betriebsanzeige (4) bzw. deren Lichtquellen (24) aktivierbare Lichtleiter (13) ist vorzugsweise plattenförmig aus durchsichtigem Glas, Kunststoffmaterial (z. B. Plexiglas®) oder dergl. gefertigt und vorteilhaft wiederlösbar in ein separates Rahmenteil (16) eingesetzt, welches in Fig. 7 näher dargestellt ist. Mit dem Rahmenteil (16) wird der Lichtleiter (13) form- und/oder kraftschlüssig verbunden, wobei das Rahmenteil (16) den Lichtleiter (13) seitlich und rückseitig einspannt. Die der Arbeitsplattenunterseite (11) zugekehrte Rahmenteilseite, sh. Fig. 7, ist dafür als geschlossene Rückseite (26) ausgebildet, welche den eingesetzten Lichtleiter (13) rückseitig überdeckt.

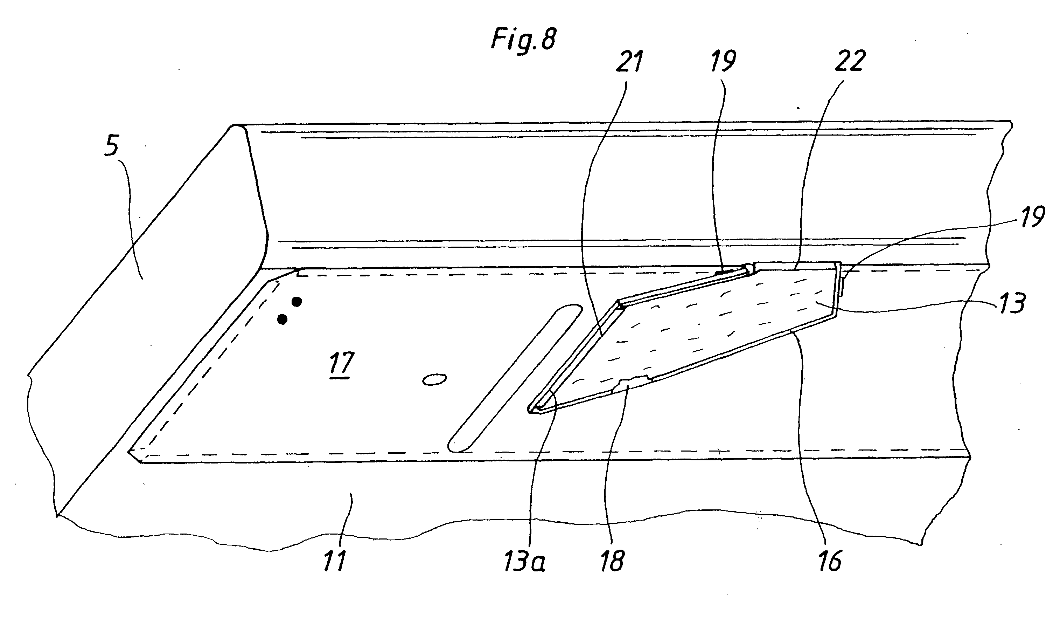

Erfindungsgemäß ist der mit geringer Bauhöhe im Rahmenteil (16) eingespannte plattenförmige Lichtleiter (13) gemäß Fig. 8 und 9 lagefixiert mit einem an der Arbeitsplattenunterseite (11 ) über der Gerätetür (2) angeordneten Wrasenschutzelement (17) kombiniert. Das Rahmenteil (16) mit dem eingesetzten Lichtleiter (13) ist dafür in einem Materialausschnitt (18) des Wrasenschutzelements (17) lösbar festgesetzt, wobei der Lichtleiter (13) abhängig von seiner Materialstärke mehr oder weniger tief in das Material des Wrasenschutzelements (17) eintaucht. Die Materialstärke ist so bemessen, dass ein genügender Freiraum zwischen Türoberkante und dem Wrasenschutzelement (17) verbleibt, damit die Gerätetür (2) ungehindert geschlossen werden kann (Fig. 2).

Die "versenkte" Anordnung des Lichtleiters (13) ermöglicht eine problemlose Unterbringung des Wrasenschutzelementes (17) samt Lichtleitoptik im schmalen Spalt zwischen Gerätetür (2) und Arbeitsplatte (5). Das ohnehin lagefixiert einzubauende Wrasenschutzelement (17) zentriert den im Wrasenblech festgesetzten Lichtleiter (13) bzw. dessen lichtaufnehmende Flächen exakt auf die Lichtquellen (24) der optische Betriebsanzeige (4). Bei der Montage des Wrasenschutzelementes (17) bestimmt die Vorderkante der Arbeitsplatte (5) und ggf. ein vorgegebenes Seitenmaß zum benachbarten Schrankmöbel bzw. die Breite der Geschirrspülmaschine (1) die Ausrichtung der Montageeinheit aus Wrasenblech, Rahmen und Lichtleiter. Der eingebaute Lichtleiter (13) schließt bündig mit der Vorderkante der Arbeitsplatte (5) ab. Das Wrasenschutzelement (17) verhindert in an sich bekannter Weise, dass beim Türöffnen der Geschirrspülmaschine (1) am Ende eines Trocknungsganges oder im laufenden Spülprogramm Feuchtigkeit in das Holz-Plattenmaterial der Arbeitsplatte (5) eindringt.
Bei Geräteabdeckungen aus Stein- oder Kunststoffmaterial hingegen ist ein Wrasenschutz nicht zwingend notwendig. In diesen Fällen genügt es, wenn der Lichtleiter (13) nur mit dem Rahmenteil (16) verbunden wird, wobei dieses dann lagefixiert am Plattenüberstand (14) bzw. an der Arbeitsplattenunterseite (11) festgesetzt wird. Zum lagegerechten Positionieren des Rahmenteils (16) an der Arbeitsplatte (nicht gezeigt) kann eine Schablone zu Hilfe genommen werden. Eine solche Schablone könnte bspw. das bei Arbeitsplatten aus Stein oder Kunststoff nicht benötigte Wrasenschutzelement (17) selbst sein. Für die Befestigung des Rahmenteils (16) ist eine unlösbare Verbindungsart - vorzugsweise eine Klebeverbindung - vorteilhaft. Jedoch wäre ggf. auch eine Schraubverbindung möglich. Der Lichtleiter (13) selbst ist wiederlösbar in das Rahmenteil (16) eingesetzt.

Die Befestigung des Lichtleiters (13) im Rahmenteil (16) sowie die Verbindung des Rahmenteils (16) mit dem Wrasenschutzelement (17) erfolgt durch Rastverbindungselemente, wofür das Rahmenteil (16) und der Lichtleiter (13) mit entsprechenden Rastnocken (19 bzw. 20) gemäß Fig. 6, 7, 8 und 11 versehen ist. Die Rastnocken (19) des Rahmenteils (16) greifen dabei in korrespondierende Rastausnehmungen (nicht näher gezeigt) im Materialausschnitt (18) des Wrasenschutzelements (17) ein. Die im Kantenbereich des formschlüssig eingesetzten plattenförmigen Lichtleiters (13) angeordneten Rastnocken (20) hingegen tauchen in zugeordnete Rastausnehmungen am Rahmenteil (16) ein, so dass die komplette Optik lagefixiert sowie form- und kraftschlüssig, jedoch auch wiederlösbar gehalten ist.

Der plattenförmige Lichtleiter (13) ist mit einer der optischen Betriebsanzeige (4) zugekehrten Lichteintrittsfläche (21), sh. Fig. 5, 8, 9, 10, 11 sowie mit einer zur Gerätefrontseite (25) der Geschirrspülmaschine (1) hin ausgerichteten Lichtaustrittsfläche (22) versehen. Ferner ist der flache Lichtleiter (13) mit ein oder mehreren Lichtreflektionsflächen (23) ausgebildet, wofür umfangsbegrenzende Kanten des Lichtleiters (13) herangezogen werden. Die Lichtreflektion beruht auf der an sich bekannten Totalreflektion. Die Lichteintrittsfläche (21) sowie die Lichtaustrittsfläche (22) sind an getrennten Kantenbereichen des Lichtleiters (13) ausgebildet, wobei die Lichtreflektionsflächen (23) im Verlauf der Kanten zwischen der Lichteintrittsfläche (21) und der Lichtaustrittsfläche (22) liegen. Es ist dabei die Lichteintrittsfläche (21) quer zum Stahlengang (12) der Lichtquellen (24) der optischen Betriebsanzeige (4) ausgerichtet und erstreckt sich im Lichtleiter (13) in Richtung der Gerätetiefe. Das in den Lichtleiter (13) von unten her eintretende Licht aus den Lichtquellen (24) der optischen Betriebsanzeige (4) wird an einer 90°-Lichtumlenkfläche (21') reflektiert (sh. Fig. 2, 10, 11), die durch eine schmale parallel zum angrenzenden Kantenrand (13a) des Lichtleiters (13) verlaufende 45°-Abschrägung gebildet wird. Die Lichtaustrittsfläche (22) des Lichtleiters (13) schließt bündig zur Vorderkante der Arbeitsplatte (5) der Dekorplatte (6) oder dazwischen ab und weist ebenfalls einen Kantenbruch (Anschrägung 22') auf, welcher wie der Kantenrand (13a) der 90°-Lichtumlenkfläche (21') Dachschräge besitzt. Die Anschrägung (22') lenkt das von der optischen Betriebsanzeige (4) kommende Licht vorteilhaft nach oben in Augenrichtung eines vor dem Gerät stehenden Gerätebedieners (sh. Fig. 2).

Der die Lichteintrittsfläche (21) in ihrer gesamten Länge überdeckende als 90°-Lichtumlenkfläche (21') wirkende schräge Kantenbereich (13a) bestimmt die Breite des über der optischen Betriebsanzeige (4) auszurichtenden Abtastfeldes. Dabei kann auch die Materialstärke des Lichtleiters (13) von Einfluss sein. Weil die Lichtkegelachse der Lichtquelle (24) ca. 90° zur Lichteintrittsfläche (21) steht, so werden insbesondere achsparallele Lichtstrahlen von der 90°-Lichtumlenkfläche (21') total reflektiert und zu den weiteren Reflektionsflächen (23), von denen gemäß dem Ausführungsbeispiel nach Fig. 6 u. 11 mindestens zwei vorgesehen sind, weitergeleitet. Die Länge des Abtastfeldes bzw. der 90°-Lichtumlenkfläche (21') kompensiert Lagetoleranzen und vor allem die Größe des Arbeitsplattenüberstandes (14). Es erübrigt sich daher auch eine Feinjustierung oder Tiefenausrichtung des im Rahmenteil (16) eingespannten Lichtleiters (13) bei der Montage im Plattenüberstand (14) unter der Arbeitsplatte (5).

Der größte Teil des über die Lichteintrittsfläche (21) eintretenden und an der 90°-Lichtumlenkfläche (21') reflektierten Lichts wird somit vorteilhaft durch den Lichtleiter (13) zur Gerätefrontseite (25) des Gerätes hin geführt. Dabei unterstützen die im Strahlengang (12) des reflektierten Lichts erfindungsgemäß vorgesehenen Lichtreflektionsflächen (23) am Umfang des Lichtleiters die gezielte Fortleitung des Lichtes bis zur Lichtaustrittsfläche (22) hin. Die Anordnung und Ausrichtung bzw. die jeweilige Winkellage der aneinanderstoßenden Reflektionskanten (23) der betreffenden Umfangsteilstrecken ist so getroffen, dass eine Bündelung bzw. Konzentration des Lichtes zur Lichtaustrittsfläche (22) hin erfolgt. Dabei erfolgt gemäß dem Ausführungsbeispiel eine Lichtlenkung in der Lichtleiterebene von ca. 90°.

Die gemäß Fig. 11 an verschiedene Positionen der Lichteintrittsfläche des Lichtleiters (13) beispielsweise dargestellte Lichtquelle (24) verdeutlicht die vorteilhafte Möglichkeit der Kompensation von Lagetoleranzen in der Tiefe des über der optischen Betriebsanzeige (4) ausgerichteten Lichtleiters (13). Hingegen kompensieren sich seitliche Abweichungen bzw. Lagetoleranzen innerhalb der 90°-Lichtumlenkfläche (21') ebenfalls selbsttätig ohne Feinjustierung.

Die Erfindung erleichtert vorteilhaft einen lagegerechten Einbau des Lichtleiters (13) im schmalen Spalt zwischen der Gerätetüroberkante und der darüber angeordneten Arbeits- oder Geräteabdeckplatte, wobei alle optischen Elemente des optischen Systems exakt aufeinander einfach ausgerichtet werden können und eine optimale Signalgabe zur Gerätefrontseite (25) hin auch bei hellem Umgebungslicht gewährleistet ist.

## Patentansprüche

1. Geschirrspülmaschine, insbesondere eine einbaufähige Geschirrspülmaschine, mit einer schwenkbaren Gerätetür die auf ihrer oberen Stirnfläche eine optische Betriebsanzeige mit einer oder mehreren Lichtquellen aufweist, welche bei geschlossener Gerätetür von einer oben auf der Spülmaschine aufliegenden Arbeitsplatte überdeckt sind, wobei im Spalt über der Gerätetür und der Unterseite der überdeckenden Arbeitsplatte ein Lichtleiter angeordnet ist, welcher das Signallicht der überdeckten optischen Betriebsanzeige zur Gerätefrontseite lenkt,
**dadurch gekennzeichnet,**
**dass** der Lichtleiter (13) mit einem an der Arbeitsplattenunterseite (11) über der Gerätetür (2) lagefixiert angeordneten Wrasenschutzelement (17) verbunden oder in einem an der Plattenunterseite ortsfest montierten separaten Rahmenteil (16) befestigt ist.

2. Geschirrspülmaschine nach Anspruch 1,
**dadurch gekennzeichnet,**
**dass** das Wrasenschutzelement (17) plattenförmig ausgebildet ist, und dass der Lichtleiter (13) am Wrasenschutzelements (17) vorzugsweise lösbar festgesetzt ist.

3. Geschirrspülmaschine nach Anspruch 1 und 2,
**dadurch gekennzeichnet,**
**dass** der Lichtleiter (13) in einem Materialausschnitt (18) des Wrasenschutzelements (17) festgesetzt ist.

4. Geschirrspülmaschine nach einem der Ansprüche 1 bis 3,
**dadurch gekennzeichnet,**
**dass** der Lichtleiter (13) über das Rahmenteil (16) im Materialausschnitt (18) des Wrasenschutzelements (17) wiederlösbar festgesetzt ist.

5. Geschirrspülmaschine nach einem der Ansprüche 1 bis 4,
**dadurch gekennzeichnet,**
**dass** das separate Rahmenteil (16) mit dem Lichtleiter (13) am Plattenüberstand (14) der Arbeitsplatte (5) vorzugsweise durch eine Klebeverbindung lagefixiert befestigt ist.

6. Geschirrspülmaschine nach einem der Ansprüche 1 bis 5,
**dadurch gekennzeichnet,**
**dass** der Lichtleiter (13) im Materialausschnitt (18) des Wrasenschutzelements (17) bzw. im Rahmenteil (16) form- und/oder kraftschlüssig gehalten ist.

7. Geschirrspülmaschine nach einem der Ansprüche 1 bis 6,
**dadurch gekennzeichnet,**
**dass** der Lichtleiter (13) plattenförmig ausgebildet ist und mit einer der optischen Betriebsanzeige (4) zugekehrten Lichteintrittsfläche (21) sowie einer zur Frontseite (25) der Geschirrspülmaschine (1) hin ausgerichteten Lichtaustrittsfläche (22) und ein oder mehreren Lichtreflektionsflächen (23) versehen ist.

8. Geschirrspülmaschine nach einem der Ansprüche 1 bis 7,
**dadurch gekennzeichnet,**
**dass** die Lichteintrittsfläche (21) und die Lichtaustrittsfläche (22) an getrennten Kanten des plattenförmigen Lichtleiters ausgebildet sind, wobei die Lichtreflektionsflächen (23) zwischen der Lichteintrittsfläche (21) und der Lichtaustrittsfläche (22) liegen.

9. Geschirrspülmaschine nach einem der Ansprüche 1 bis 8,
**dadurch gekennzeichnet,**
**dass** die Lichteintrittsfläche (21) quer zu den der optischen Betriebsanzeige (4) ausgehenden Lichtstrahlen (12) in Richtung Gerätetiefe verläuft und durch eine schmale parallel zum angrenzenden Kantenrand (13a) verlaufende 90°-Lichtumlenkfläche (21') gebildet ist, wobei die Lichtaustrittsfläche (22) des Lichtleiters (13) parallel zum oberen Türrand der Gerätetür (2) verläuft.

10. Geschirrspülmaschine nach einem der Ansprüche 1 bis 9,
**dadurch gekennzeichnet,**
**dass** der 90°-Lichtumlenkfläche (21') benachbarte Kantenbereich (13) als Reflektionskante abgeschrägt ausgebildet ist und die 90°-Lichtumlenkfläche (21') in ihrer gesamten Länge überdeckt und deren Breite bestimmt.

11. Geschirrspülmaschine nach einem der Ansprüche 1 bis 10,
**dadurch gekennzeichnet,**
**dass** der zugeordnete Kantenbereich der Lichtaustrittsfläche (22) vorzugsweise mit einer zur Reflektionskante der Lichteintrittsfläche (21) entgegengesetzt verlaufenden Abschrägung (22') versehen ist.

12. Geschirrspülmaschine nach einem der Ansprüche 1 bis 11,
**dadurch gekennzeichnet,**
**dass** die 90°-Lichtumlenkfläche (21') winkelversetzt zur Lichtaustrittsfläche (22) am plattenförmigen Lichtleiter (13) ausgebildet ist.

13. Geschirrspülmaschine nach einem der Ansprüche 1 bis 12,
**dadurch gekennzeichnet,**
**dass** der Lichtleiter (13) sowie das Rahmenteil (16) vorzugsweise mittels Rastverbindungsglieder (19, 20) untereinander und/oder am Wrasenschutzelement (17) gehalten sind.

14. Geschirrspülmaschine nach einem der Ansprüche 1 bis 13,
**dadurch gekennzeichnet,**
**dass** das lagegerechte Positionieren des Rahmenteils (16) für den Lichtleiter (13) bzw. des Wrasenschutzelements (17) ggf. über eine Schablone erfolgt.

15. Geschirrspülmaschine nach Anspruch 14,
**dadurch gekennzeichnet,**
**dass** als Schablone für das Rahmenteil (16) das Wrasenschutzelement (17) verwendet ist.

## Claims

1. Dishwasher, more especially a dishwasher which can be built-in, including a pivotable appliance door which has a visible operation indicator with one or more light sources on its upper end face, said sources being covered by a worktop, which rests on the top of the dishwasher, when the appliance door is closed, a light conductor being disposed in the gap above the appliance door and the underside of the covering worktop, said light conductor directing the signal light of the covered visible operation indicator to the front of the appliance, **characterised in that** the light conductor (13) is connected to a vapour protection element (17), which is disposed in a positionally fixed manner on the worktop underside (11) above the appliance door (2), or said light conductor is mounted in a separate frame part (16) assembled in a stationary manner on the underside of the worktop.

2. Dishwasher according to claim 1, **characterised in that** the vapour protection element (17) is plate-shaped, and **in that** the light conductor (13) is preferably secured in a detachable manner on the vapour protection element (17).

3. Dishwasher according to claims 1 and 2, **characterised in that** the light conductor (13) is secured in a cutaway portion of material (18) of the vapour protection element (17).

4. Dishwasher according to one of claims 1 to 3, **characterised in that** the light conductor (13) is re-releasably secured in the cutaway portion of material (18) of the vapour protection element (17) via the frame part (16).

5. Dishwasher according to one of claims 1 to 4, **characterised in that** the separate frame part (16) is mounted with the light conductor (13) in a positionally secure manner on the protruding length (14) of the worktop (5), preferably by means of an adhesive connection.

6. Dishwasher according to one of claims 1 to 5, **characterised in that** the light conductor (13) is retained in the cutaway portion of material (18) of the vapour protection element (17), or respectively in the frame part (16), in a form-fitting and/or force-fitting manner.

7. Dishwasher according to one of claims 1 to 6, **characterised in that** the light conductor (13) is plate-shaped and provided with a light admission area (21), facing the visible operation indicator (4), as well as a light exit area (22), which is orientated towards the front (25) of the dishwasher (1), and one or more light reflection areas (23).

8. Dishwasher according to one of claims 1 to 7, **characterised in that** the light admission area (21) and the light exit area (22) are provided on separate edges of the plate-shaped light conductor, the light reflection areas (23) lying between the light admission area (21) and the light exit area (22).

9. Dishwasher according to one of claims 1 to 8, **characterised in that** the light admission area (21) extends in the direction of the appliance depth transversally relative to the light rays (12), emerging from the visible operation indicator (4), and is formed by a narrow 90°-light deviating area (21'), which extends parallel to the adjacent edge (13a), the light exit area (22) of the light conductor (13) extending parallel to the upper edge of the appliance door (2).

10. Dishwasher according to one of claims 1 to 9, **characterised in that** the edge region (13), adjacent the 90°-light deviating area (21'), is tapered as the reflection edge and covers the 90°-light deviating area (21') in its entire length and determines the width of said area.

11. Dishwasher according to one of claims 1 to 10, **characterised in that** the associated edge region of the light exit area (22) is preferably provided with a tapering (22'), which extends in opposition to the reflection edge of the light admission area (21).

12. Dishwasher according to one of claims 1 to 11, **characterised in that** the 90°-light deviating area (21') is provided on the plate-shaped light conductor (13) in an angularly offset manner relative to the light exit area (22).

13. Dishwasher according to one of claims 1 to 12, **characterised in that** the light conductor (13) as well as the frame part (16) are preferably retained together and/or on the vapour protection element (17) by means of locking connection members (19, 20).

14. Dishwasher according to one of claims 1 to 13, **characterised in that** the correctly located positioning of the frame part (16) for the light conductor (13), or respectively of the vapour protection element (17), is possibly effected via a template.

15. Dishwasher according to claim 14, **characterised in that** the vapour protection element (17) is used as the template for the frame part (16).

## Revendications

1. Lave-vaisselle, en particulier lave-vaisselle encastrable, avec une porte d'appareil pivotante, qui comporte sur sa face frontale supérieure un indicateur de fonctionnement optique avec une ou plusieurs sources lumineuses qui, lorsque la porte d'appareil est fermée, sont recouvertes par une plaque de travail posée en haut sur le lave-vaisselle, dans la fente au-dessus de la porte d'appareil et de la face inférieure de la plaque de travail de recouvrement, un guide de lumière étant installé qui dirige la lumière du signal de l'indicateur de fonctionnement optique recouvert vers la façade d'appareil, **caractérisé en ce que** le guide de lumière (13) est raccordé à un élément de protection contre la buée (17) agencé en position fixe au niveau de la face inférieure de la plaque de travail (11) au-dessus de la porte d'appareil (2) ou fixé dans une partie de châssis (16) séparée montée fixement sur la face inférieure de la plaque.

2. Lave-vaisselle selon la revendication 1, **caractérisé en ce que** l'élément de protection contre la buée (17) est en forme de plaque et **en ce que** le guide de lumière (13) est fixé, de préférence de manière détachable, à l'élément de protection contre la buée (17).

3. Lave-vaisselle selon les revendications 1 et 2, **caractérisé en ce que** le guide de lumière (13) est fixé dans une découpure de matière (18) de l'élément de protection contre la buée (17).

4. Lave-vaisselle selon l'une quelconque des revendications 1 à 3, **caractérisé en ce que** le guide de lumière (13) est fixé au-dessus de la partie de châssis (16) dans la découpure de matière (18) de l'élément de protection contre la buée (17) de manière à pouvoir être redétachée.

5. Lave-vaisselle selon l'une quelconque des revendications 1 à 4, **caractérisé en ce que** la partie de châssis séparée (16) est fixée en position fixe avec le guide de lumière (13) à l'extrémité en porte-à-faux (14) de la plaque de travail (5), de préférence à l'aide d'un assemblage collé.

6. Lave-vaisselle selon l'une quelconque des revendications 1 à 5, **caractérisé en ce que** le guide de lumière (13) est maintenu par engagement positif et/ou par adhérence dans la découpure de matière (18) de l'élément de protection contre la buée (17) ou dans la partie de châssis (16).

7. Lave-vaisselle selon l'une quelconque des revendications 1 à 6, **caractérisé en ce que** le guide de lumière ( 13) est conçu en forme de plaque et est muni d'une surface d'admission de lumière (21) tournée vers l'indicateur de fonctionnement optique (4) ainsi que d'une surface de sortie de lumière (22) orientée vers la façade (25) du lave-vaisselle (1) et d'une ou plusieurs surfaces de réflexion de lumière (23).

8. Lave-vaisselle selon l'une quelconque des revendications 1 à 7, **caractérisé en ce que** la surface d'admission de lumière (21) et la surface de sortie de lumière (22) sont prévues sur des arêtes séparées du guide de lumière en forme de plaque, les surfaces de réflexion de lumière (23) étant placées entre la surface d'admission de lumière (21) et la surface de sortie de lumière (22).

9. Lave-vaisselle selon l'une quelconque des revendications 1 à 8, **caractérisé en ce que** la surface d'admission de lumière (21) s'étend, dans le sens de la profondeur de l'appareil, transversalement aux rayons lumineux (12) sortant de l'indicateur de fonctionnement optique (4) et est formée par une étroite surface de déflexion de lumière (21') de 90° s'étendant parallèlement au bord d'arête adjacent (13a), la surface de sortie de lumière (22) du guide de lumière (13) s'étendant parallèlement au bord supérieur de la porte d'appareil (2).

10. Lave-vaisselle selon l'une quelconque des revendications 1 à 9, **caractérisé en ce que** la zone d'arête (13) adjacente à la surface de déflexion de lumière (21') de 90° est configurée en biseau comme arête de réflexion et recouvre la surface de déflexion de lumière (21') sur toute sa longueur et détermine sa largeur.

11. Lave-vaisselle selon l'une quelconque des revendications 1 à 10, **caractérisé en ce que** la zone d'arête de la surface de sortie de lumière (22) associée est munie, de préférence, d'un biseautage (22') s'étendant à l'opposé de l'arête de réflexion de la surface d'admission de lumière (21).

12. Lave-vaisselle selon l'une quelconque des revendications 1 à 11, **caractérisé en ce que** la surface de déflexion de lumière (21') de 90° est conçue sur le guide de lumière (13) en forme de plaque décalée angulairement par rapport à la surface de sortie de lumière (22).

13. Lave-vaisselle selon l'une quelconque des revendications 1 à 12, **caractérisé en ce que** le guide de lumière (13) ainsi que la partie de châssis (16) sont maintenus ensemble et/ou sur l'élément de protection contre la buée (17), de préférence à l'aide d'éléments de raccordement à crans (19, 20).

14. Lave-vaisselle selon l'une quelconque des revendications 1 à 13, **caractérisé en ce que** le positionnement en position correcte de la partie de châssis (16) pour le guide de lumière (13) ou de l'élément de protection contre la buée (17) se fait éventuellement à l'aide d'un gabarit.

15. Lave-vaisselle selon la revendication 14, **caractérisé en ce que** l'on utilise l'élément de protection contre la buée (17) comme gabarit pour la partie de châssis (16).
